# EUROPÄISCHE PATENTANMELDUNG

(11) **EP 0 943 794 A1**
(43) Veröffentlichungstag der Anmeldung: **22.09.1999**
(21) Anmeldenummer: 98810228.1
(22) Anmeldetag: 18.03.1998
(51) Int. Cl.: F02F 1/20, F16J 10/04

(54) **Zylinderlaufbuchse**

(71) Anmelder: Wärtsilä NSD Schweiz AG, 8401 Winterthur (CH)
(72) Erfinder: Bitterli, Alois, 8492 Wila (CH)
(74) Vertreter: Sulzer Management AG

(57) **Zusammenfassung**

Eine Zylinderlaufbuchse (1) für Brennkraftmaschinen, insbesondere für Grossdieselmotoren, weist eine Lauffläche für einen entlang dieser Lauffläche bewegbaren Kolben (2) auf, wobei in der Lauffläche quer zur Laufrichtung des Kolbens (2) angeordnete, rillenförmig vertiefte Bereiche (4,4a,4b,4c,4d,4e) vorgesehen sind, die eine vorgegebene Breite (W) aufweisen. In Richtung der Längsachse (A) der Zylinderlaufbuchse (1) betrachtet sind mindestens zwei rillenförmig vertiefte Bereiche benachbart zueinander und in gleicher Richtung verlaufend angeordnet. Der axiale Abstand (D) zweier benachbarter und in gleicher Richtung verlaufender, rillenförmig vertiefter Bereiche beträgt mindestens das eineinhalbfache ihrer Breite (W).

## Beschreibung

Die Erfindung betrifft eine Zylinderlaufbuchse gemäss dem Oberbegriff des unabhängigen Patentanspruchs.

Es ist bekannt, bei Zylinderlaufbuchsen (cylinder liner) von Grossdieselmotoren Rillen bzw. rillenförmige Bereiche in unterschiedlichen Bereichen der Laufbuchse vorzusehen. So ist es beispielsweise aus der EP-A-0,215,511 bekannt, im Brennraum, also in dem Bereich oberhalb des obersten Kolbenrings, wenn dieser im oberen Totpunkt steht, eine Profilierung in Form von Rillen in der Wand der Laufbuchse vorzusehen. Diese Profilierung dient dem Abstreifen von Ölkohle, die sich am Feuersteg des Kolbens anlagert.

Es ist weiterhin aus der CH-A-342,409 bekannt, auch in einem solchen Teil der Lauffläche rillenförmige Vertiefungen vorzusehen, der von den oberen vier Kolbenringen überstrichen wird. Der Kolben weist aber zusätzlich zu den oberen vier Kolbenringen an seinem unteren Ende noch einen Ölabstreifring auf. Dieser Ölabstreifring gleitet jedoch in jedem Fall an einem Bereich der Laufbuchse entlang, in welchem keine rillenförmigen Vertiefungen vorgesehen sind. Dieser Bereich muss also in jedem Fall glatt sein. Die gewollte Rauhung mittels der rillenförmigen Bereiche hat den Zweck, die Bearbeitungsungenauigkeiten von der Herstellung und die beim Einlauf der Maschine auftretenden Wärmedeformationen zu beseitigen. Mit anderen Worten, es tritt ein gewünschter Materialabtrag auf.

Eine derartiges "Einlaufen" des Kolbens in der Laufbuchse ist heutzutage aufgrund der hohen Bearbeitungsgenauigkeit bei der Herstellung von Laufbuchsen und aufgrund der hierfür zur Verfügung stehenden Materialien und deren Eigenschaften nicht mehr erforderlich. Da die Materialien für die Laufbuchsen hart sind, kann es allerdings dann, wenn Partikel zwischen den Kolben und die Laufbuchse gelangen (z.B. Kokspartikel, Ausbrüche aus der Lauffläche, Ausbrüche von Kolbenringen), zu "Kolbenfressern" kommen, die in letzter Konsequenz zum Defekt des Kolbens und/oder der Laufbuchse führen können.

Ausgehend davon ist es eine Aufgabe der Erfindung, eine Zylinderlaufbuchse mit verbessertem Laufverhalten vorzuschlagen. Insbesondere sollen dabei Kolbenfresser so weit wie möglich vermieden werden. Diese Aufgabe wird durch die Erfindung, wie sie im unabhängigen Patentanspruch charakterisiert ist gelöst.

Bei der erfindungsggemässen Zylinderlaufbuchse sind in der Lauffläche quer zur Laufrichtung des Kolbens rillenförmig vertiefte Bereiche vorgesehen, die eine vorgegebene Breite aufweisen. In Richtung der Längsachse der Zylinderlaufbuchse betrachtet sind mindestens zwei rillenförmig vertiefte Bereiche benachbart zueinander und in gleicher Richtung verlaufend angeordnet, wobei der axiale Abstand zweier benachbarter und in gleicher Richtung verlaufender, rillenförmig vertiefter Bereiche mindestens das eineinhalbfache ihrer Breite beträgt. Dadurch wird einerseits erreicht, dass der Kolben bzw. die Kolbenringe im Bereich zwischen den einzelnen Nuten immer auf einer ebenen Auflagefläche hoher Qualität gleiten kann (üblicherweise auf einer gehonten Fläche) und somit ein gutes und zuverlässiges Gleiten des Kolbens bzw. der Kolbenringe gewähleistet ist. Andererseits wird erreicht, dass dann, wenn einmal Partikel zwischen Kolben und Lauffläche gelangt sind, diese Partikel nur über ein kurzes Stück, nämlich bis zur nächsten Nut, mitgenommen werden und nur eine kurze Fressspur erzeugen. Darüberhinaus haben derartige Nuten auch den Vorteil, dass sich Schmieröl in den Nuten sammeln kann, sodass auch bei örtlicher Mangelschmierung - also dann, wenn die Schmierölzufuhr durch den Zylinder kurzfristig einmal örtlich nicht ganz optimal ist oder lokal einmal mehr Schmieröl benötigt wird - trotzdem ein gutes Gleiten sichergestellt ist. Bei einem bevorzugten Ausführungsbeispiel beträgt der axiale Abstand zweier benachbarter und in gleicher Richtung verlaufender rillfenförmig vertiefter Bereiche das fünf- bis sechsfache ihrer Breite.

Bevorzugterweise sind zumindest in dem Bereich der Lauffläche, der von dem unterhalb des obersten Kolbenrings liegenden Teil des Kolbens überstrichen wird, rillenförmig vertiefte Bereiche vorgesehen. Somit werden die weiter oben bereits erläuterten vorteilhaften Wirkungen über den gesamten Bereich, den der Kolben überstreicht, gewährleistet.

Weiterhin vorteilhaft ist es, wenn in dem gesamten Bereich der Lauffläche, der sich unterhalb des obersten Kolbenrings erstreckt, wenn der Kolben im oberen Totpunkt steht, rillenförmig vertiefte Bereiche vorgesehen sind. Dann ist es nämlich völlig unerheblich, ob der Kolben zum Erreichen des unteren Totpunkts teilweise aus der Zylinderlaufbuchse austritt oder nicht. Wenn nämlich derartige rillenförmige Bereiche bis ans untere Ende der gesamten Lauffläche der Zylinderlaufbuchse vorgesehen sind, dann werden die bereits weiter oben genannten vorteilhaften Wirkungen in jedem Fall erzielt, ob nun der Kolben aus der Laufbuchse austritt oder nicht.

Die in der Lauffläche vorgesehenen rillenförmig vertieften Bereiche können einer Schraubenlinie folgen oder Teilen davon. Sie können insbesondere einer einzigen Schraubenlinie folgen bzw. Teilen davon, oder aber auch mehreren Schraubenlinien bzw. Teilen davon. Speziell können die rillenförmig vertieften Bereiche, die in axialer Richtung betrachtet unter- oder übereinander zu liegen kommen, Bestandteil einer einzigen, durchgehenden schraubenförmigen Rille sein. Die rillenförmig vertieften Bereiche können alternativ auch auf einer einzigen Schraubenlinie liegen, aber es sind immer nur Teile dieser Schraubenlinie als vertiefte Bereiche ausgebildet, wobei diese vertieften Bereiche axial unter- bzw. übereinander zu liegen kommen. Schliesslich können die vertieften Bereiche auch Bestandteil von mehreren durchgehenden schraubenförmigen Rillen sein, sie können aber auch auf mehreren Schraubenlinien liegen, aber es sind immer nur Teile dieser Schraubenlinien als vertiefte Bereiche ausgebildet, wobei diese vertieften Bereiche dann axial unter- bzw. übereinander zu liegen kommen.

Schliesslich können die rillenförmig vertieften Bereiche so angeordnet sein, dass sie sich kreuzen. Dies ist auch dann möglich, wenn die einzelnen vertieften Bereiche jeweils auf Schraubenlinien liegen. Man stelle sich hierzu einfach zwei Schraubenlinien mit unterschiedlicher Orientierung vor, eine linksorientierte und eine rechtsorientierte.

Alternativ können die in der Lauffläche vorgesehenen, rillenförmig vertieften Bereiche auch ringförmig geschlossen sein. Insbesondere können die ringförmig geschlossenenen, rillenförmig vertieften Bereiche dabei senkrecht zur Längsachse der Zylinderlaufbuchse angeordnet sein.

Das Profil der rillenförmig vertieften Bereiche ist bevorzugterweise ein Ausschnitt aus einem Kreisbogen, da dies herstellungstechnisch einfach ist. Es kommen jedoch grundsätzlich beliebige Rillenprofile in Betracht.

Ein weiteres Ausführungsbeispiel bzw. eine Weiterbildung der erfindungsgemässen Zylinderlaufbuchse zeichnet sich dadurch aus, dass der Quotient aus dem Mass zwischen einander abgewandten Kanten zweier axial benachbarter und in gleicher Richtung verlaufender rillenartig vertiefter Bereiche und der axialen Dicke eines Kolbenrings im Bereich zwischen 0.5 und 10 liegt. Dadurch wird gewährleistet, dass ein Kolbenring immer auf einer genügend grossen (typischerweise gehonten) Auflagefläche zwischen benachbarten rillenförmig vertieften Bereichen aufliegt.

Im folgenden wird die Erfindung anhand der Zeichnung näher erläutert. Es zeigen, teilweise schematisch und/oder im Schnitt:
- Fig. 1: ein Ausführungsbeispiel der erfindungsgemässen Zylinderlaufbuchse mit einer einzigen durchgehenden schraubenlinienförmigen Rille (Darstellung mit Kolben und Kolbenstange in einer Hälfte),
- Fig. 2: ein weiteres Ausführungsbeispiel der erfindungsgemässen Zylinderlaufbuchse mit gegensinnig ansteigenden, rillenförmigen Bereichen (Darstellung mit Kolben und Kolbenstange in beiden Hälften),
- Fig. 3: ein weiteres Ausführungsbeispiel einer erfindungsgemässen Zylinderlaufbuchse mit einer einzigen durchgehenden schraubenlinienförmigen Rille, jedoch mit grösserem Abstand zwischen den einzelnen Rillen,
- Fig. 4: den Ausschnitt IV aus der Lauffläche der Laufbuchse gemäss Fig. 3, mit vergrössert dargestellten Einzelheiten,
- Fig. 5: den Ausschnitt V aus Fig. 4, vergrössert,
- Fig. 6: ein weiteres Ausführungsbeispiel der erfindungsgemässen Zylinderlaufbuchse, mit Teilen von Schraubenlinien als vertiefte Bereiche,
- Fig. 7: ein weiteres Ausführungsbeispiel der erfindungsgemässen Zylinderlaufbuchse, mit Teilen von Schraubenlinien als vertiefte Bereiche, wobei sich die vertieften Bereiche kreuzen,
- Fig. 8: ein weiteres Ausführungsbeispiel der erfindungemässen Zylinderlaufbuchse mit ringförmig geschlossenen Rillen
und
- Fig. 9: einen Ausschnitt aus der Wand einer Zylinderlaufbuchse mit ringförmig geschlossenen Rillen.

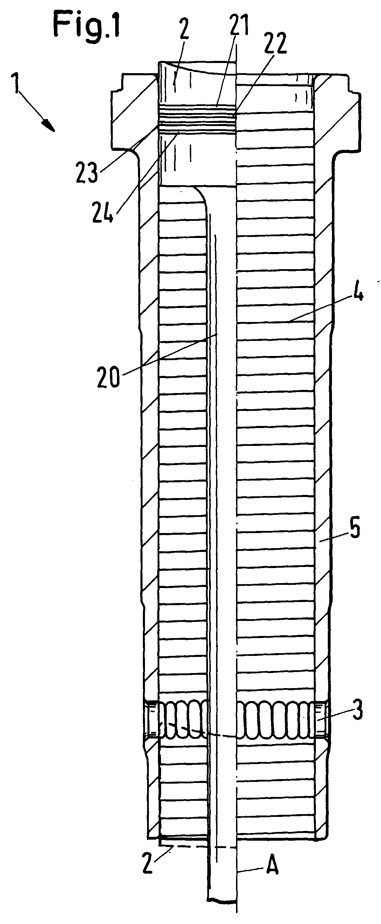

In Fig. 1 ist schematisch ein erstes Ausführungsbeispiel einer erfindungsgemässen Zylinderlaufbuchse 1 dargestellt, wie sie typischerweise bei Grossdieselmotoren - z.B. bei Schiffsdieselmotoren - zum Einsatz kommt. In der linken Hälfte ist ein Kolben 2 im oberen Totpunkt (oberer Umkehrpunkt) zu erkennen, mit seiner zugehörigen Kolbenstange 20 und seinen Kolbenringen, hier den vier Kolbenringen 21,22,23,24. Der Kolben 2 ist weiterhin im unteren Totpunkt (unterer Umkehrpunkt) gestrichelt dargestellt. Weiterhin erkennt man, dass im unteren Bereich der Zylinderlaufbuchse 1 in deren Wand 5 Lufteintrittsöffnungen 3 vorgesehen sind, durch welche die zu komprimierende Luft in den Innenraum eintreten kann. Es ist in Fig. 1 gut zu erkennen, dass dann, wenn der Kolben 2 sich im unteren Totpunkt befindet, die Luft gut durch die Lufteintrittöffnungen 3 in den Innenraum gelangen kann.

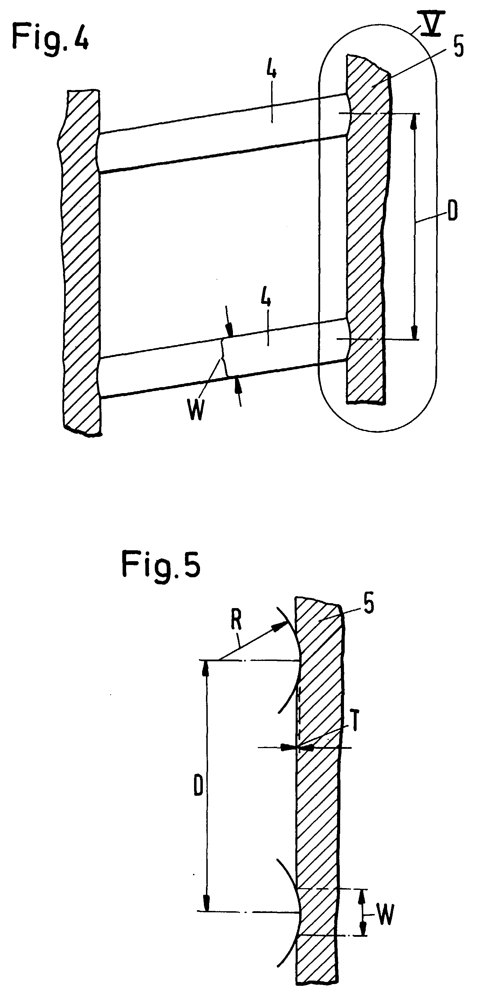

Ferner ist bei dem in Fig. 1 dargestellten Ausführungsbeispiel der erfindungsgemässen Zylinderlaufbuchse 1 eine einzige, quer zur Laufrichtung des Kolbens 2 angeordnete, durchgehende schraubenlinienförmige Rille 4 (sie ist nur als Linie dargestellt und wird in Fig. 4 und Fig. 5 näher betrachtet) in der ansonsten sehr glatten (typischerweise gehonten) Wand 5 der Zylinderlaufbuchse 1 vorgesehen, die an einem Ort unterhalb des obersten Kolbenrings 24 beginnt, wenn sich der Kolben 2 im oberen Totpunkt befindet, und die sich in der Wand 5 der Zylinderlaufbuchse 1 bis ans untere Ende der Zylinderlaufbuchse 1 erstreckt, was in diesem Fall identisch ist mit dem Bereich der Zylinderlaufbuchse 1, der von dem unterhalb des obersten Kolbenrings 21 liegenden Teil des Kolbens überstrichen wird. In Richtung der Längsachse A der Zylinderlaufbuchse 1 betrachtet existieren somit eine ganze Anzahl von rillenförmig vertieften Bereichen, die in gleicher Richtung verlaufen und die einen axialen Abstand voneinander aufweisen, der mindestens das eineinhalbfache, vorzugsweise das fünf- bis sechsfache, der Breite der Rille 4 beträgt (hierauf wird anhand von Fig. 4 und Fig. 5 noch eingegangen).

Gelangt nun aus irgendwelchen Gründen ein Partikel zwischen den Kolben 2 und die Wand 5 der Zylinderlaufbuchse 1, so nimmt der Kolben 2 bzw. einer der Kolbenringe 21,22,23,24 das Partikel in axialer Richtung mit, bis es in axialer Richtung betrachtet die nächste Vertiefung in der Wand 5 erreicht. Dort kann das Partikel in die Rille 4 hineingleiten und somit wird allenfalls nur eine kurze Fressspur in der Wand 5 der Zylinderlaufbuchse erzeugt, es kommt jedoch nicht zu den gefürchteten Kolbenfressern, die durch dauerhaftes Schaben eines solchen zwischen den Kolben 2 und die Wand 5 geratenen Partikels ansonsten entstehen können. Die Kolbenringe 21,22,23,24 weisen in axialer Richtung betrachtet eine Dicke auf, die typischerweise grösser ist als die Breite der Rille 4, sie gleiten also bei der Auf- und Abwärtsbewegung nicht in die Rille 4 hinein, sondern können stets auf der jeweils sehr glatten, gehonten Fläche zwischen zwei axial benachbarten Bereichen der Rille 4 gleiten.

Zusätzlich ist zu berücksichtigen, dass das Gleiten des Kolbens 2 bzw. der Kolbenringe 21,22,23,24 entlang der Wand 5 der Zylinderlaufbuchse 1 noch durch Schmieröl erleichtert wird. Das Schmieröl wird beispielsweise durch das Kolbeninnere oder durch separate Schmierölbohrungen in der Zylinderlaufbuchse zugeführt (nicht dargestellt) und gelangt so zwischen den Kolben 2 und die Wand 5 der Zylinderlaufbuchse. Kommt es einmal kurzfristig zu einem örtlichen Schmierölmangel, so erfüllt die Rille 4 noch einen weiteren Zweck. In der Rille 4 sammelt sich nämlich auch Schmieröl an, sodass bei einem kurzfristigen, örtlichen Schmierölmangel das in der Rille 4 angesammelte Schmieröl eine gute Schmierung des Kolbens 2 gewährleisten kann. Schliesslich wird durch die Rille 4 noch ein gewisser Druckausgleich bewirkt, der zentrierend auf den Kolben 2 wirkt.

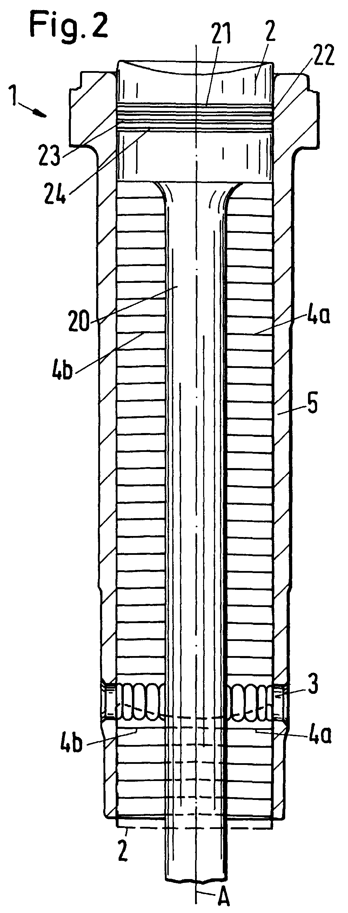

In Fig. 2 ist ein weiteres Ausführungsbeispiel der erfindungsgemässen Zylinderlaufbuchse dargestellt. Dort ist der Kolben 2 und die Kolbenstange 20 in beiden Hälften der Zylinderlaufbuchse 1 dargestellt. Dieses Ausführungsbeispeil unterscheidet sich wesentlich von dem Ausführungsbeispiel gemäss Fig. 1. In der Wand 5 der Zylinderlaufbuchse sind nämlich gegensinnig ansteigende, rillenförmig vertiefte Bereiche 4a und 4b vorgesehen sind, die zusammenstossen (wie es im unteren Bereich der Zylinderlaufbuchse gestrichelt angedeutet ist). Die einzelnen rillenförmigen Bereiche 4a bzw. 4b können auf einer oder mehreren schraubenförmigen Linien liegen, jedoch sind immer nur die einzelnen Bereiche 4a bzw. 4b rillenförmig vertieft ausgebildet. Die nicht dargestellte Hälfte der Zylinderbuchse ist völlig analog zu der dargestellten. Auch bei dem in Fig. 2 gezeigten Ausführungsbeispiel beträgt der axiale Abstand zwischen zwei benachbarten vertieften Bereichen, die in der gleichen Richtung verlaufen, wieder mindestens das eineinhalbfache der Breite der rillenförmigen Bereiche 4a bzw. 4b, vorzugsweise das fünf- bis sechsfache dieser Breite. Die rillenförmigen Bereiche 4a bzw. 4b sind wieder in dem Bereich der Zylinderlaufbuchse vorgesehen, der unterhalb des obersten Kolbenrings 21 beginnt, wenn der Kolben 2 sich im oberen Totpunkt befindet, und der sich bis zum unteren Ende der Zylinderlaufbuchse 1 erstreckt.

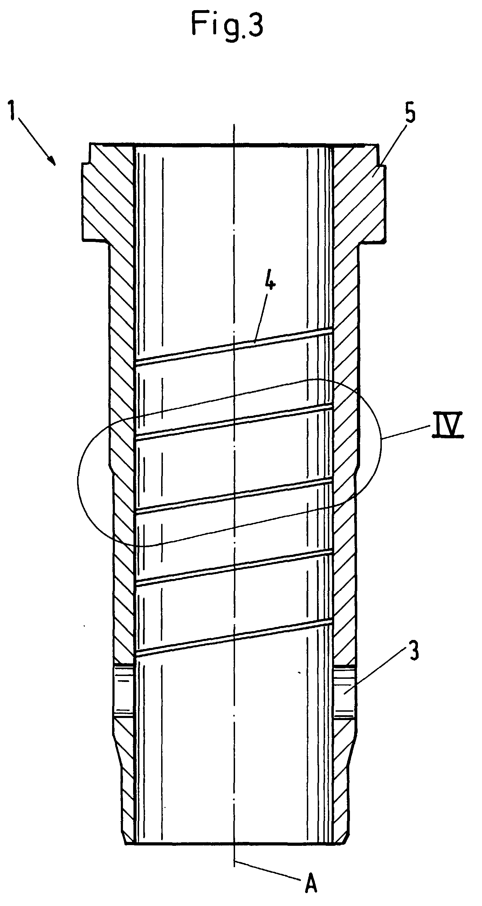

Fig. 3 zeigt ein weiteres Ausführungsbeispiel der erfindungsgemässen Zylinderlaufbuchse 1 mit einer einzigen, durchgehenden schraubenförmigen Rille 4 in der Wand 5. Die Rille 4 erstreckt sich jedoch nicht über einen gleich grossen Bereich wie bei den Ausführungsbeispielen der Fig. 1 und Fig. 2. Ausserdem sind in Fig. 3 auch nur zwei Öffnungen 3 zeichnerisch explizit dargestellt. Auf die explizite Darstellung weiterer Öffnungen 3 wurde verzichtet. Aus der Darstellung gemäss Fig. 3 ist besser zu erkennen, dass der axiale Abstand zwischen den rillenförmig vertieften Bereichen (hier: von ein- und derselben Rille) ein mehrfaches der Breite der Rille 4 beträgt. Dies soll im folgenden eingehender anhand von Fig. 4 und Fig. 5 betrachtet werden.

In Fig. 4 erkennt man den Ausschnitt IV aus der Lauffläche der Fig. 3, mit vergrössert dargestellten Einzelheiten, in Fig. 5 den Ausschnitt V aus Fig. 4, wieder mit vergrössert dargestellten Einzelheiten. Insbesondere ist aus den beiden Figuren zu erkennen, dass der axiale Abstand D zwischen zwei axial benachbarten und in gleicher Richtung verlaufenden rillenförmig vertieften Bereichen (hier: von ein- und derselben Rille 4) etwa das fünf- bis sechsfache der Breite W der rillenförmig vertieften Bereiche (hier: der Rille 4) beträgt. Die Rille 4 kann z.B. durch Schleifen oder Drehen hergestellt werden mit einem Schleifradius R, der so bemessen ist, dass die Nut nach ihrer Herstellung eine gewünschte Tiefe T aufweist.

Als beispielhaft sei hier eine Zylinderlaufbuchse 1 genannt mit einem Innendurchmesser von etwa 700 mm, einer Breite W der Rille 4 von etwa 3 mm, einem Abstand D von axial benachbarten vertieften Bereichen (hier. von ein- und derselben Rille 4) von etwa 15-16 mm, sowie mit einer Tiefe T der Rille 4 von etwa 0.2 mm, die durch Schleifen mit einem Schleifradius R von etwa 5-6 mm (oder durch Drehen) hergestellt wird.

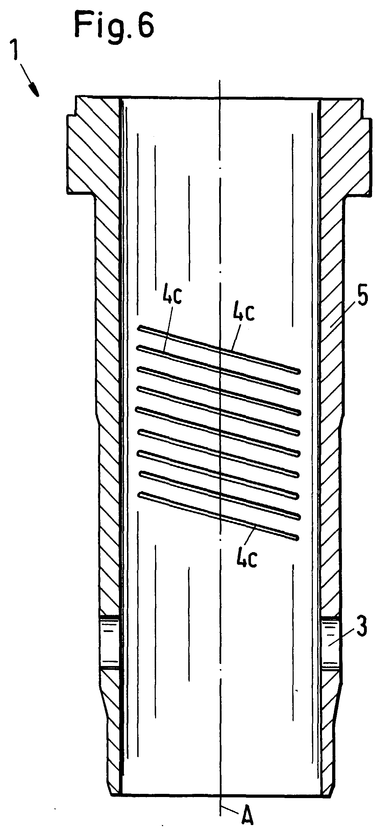

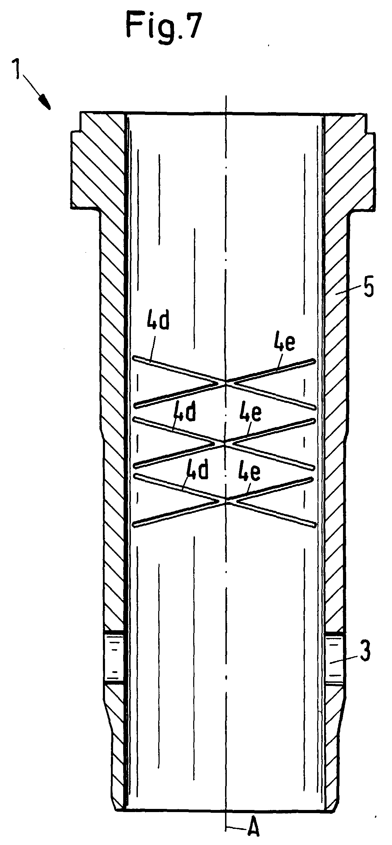

Grundsätzlich sind viele Muster für die rillenförmig vertieften Bereiche denkbar. Zwei davon sollen jedoch noch einmal beispielhaft anhand von Fig. 6 und Fig. 7 betrachtet werden. Fig. 6 zeigt rillenförmig vertiefte Bereiche 4c, die Teilen von (hier verschiedenen) Schraubenlinien folgen. Die Bereiche 4c können auch ein- und derselben Schraubenlinie folgen, müssen jedoch deshalb nicht als durchgehende Rille ausgeführt sein. Es kann auch so sein, dass jeweils nur Teile von ein- und derselben Schraubenlinie als vertiefte Bereiche ausgeführt sind. Hierzu stelle man sich einfach vor, dass die in Fig.6 dargestellten Bereiche 4c Teile von ein- und derselben Schraubenlinie sind (die Steigung müsste dazu entsprechend geringer sein als in Fig. 6 dargestellt). Fig. 7 schliesslich zeigt rillenförmige Bereiche 4d und 4e, die sich kreuzen. Die einzelnen in gleicher Richtung verlaufenden "Äste" 4d bzw. 4e können jeweils wieder Teile von verschiedenen Schraubenlinien bzw. von einer Schraubenlinie sein, ohne dass sie als durchgehende Rille ausgebildet sind. Der axiale Abstand D (Fig. 4 und Fig. 5) erstreckt sich jeweils zwischen zwei benachbarten Bereichen 4d bzw. 4e, die in gleicher Richtung verlaufen.

Das Profil der rillenförmig vertieften Bereiche erlaubt grundsätzlich viele Ausführungsarten. Das anhand von Fig. 4 und Fig. 5 näher beschriebene Profil, welches einen Ausschnitt aus einem Kreisbogen darstellt, ist deshalb beispielhaft beschrieben worden, weil es herstellungstechnisch wenig aufwendig ist. Grundsätzlich kommen aber auch andere Profile in Frage.

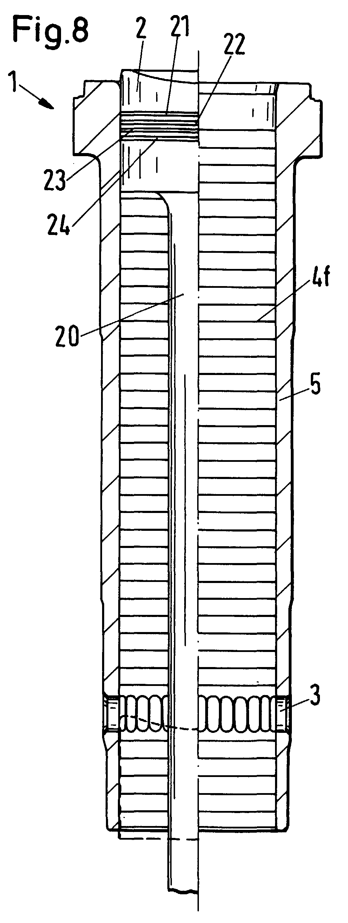

Fig. 8 zeigt schliesslich noch ein Ausführungsbeispiel der erfindungsgemässen Zylinderlaufbuchse 1 mit ringförmig geschlossenen Rillen 4f. Die Rillen 4f verlaufen - anders als bei den Ausführungsbeispielen gemäss Fig. 1, Fig. 2 oder Fig. 3 - nicht mit einer Steigung in Bezug auf die Längsachse A der Zylinderlaufbuchse 1, sondern vorzugsweise senkrecht zur Längsachse A und damit senkrecht zur Bewegungsrichtung des Kolbens 2.

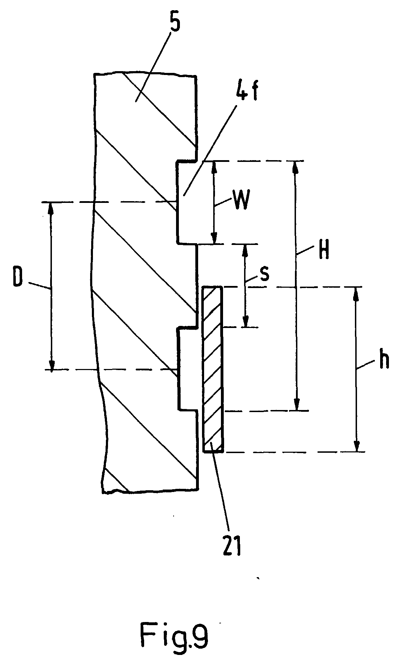

Anhand von Fig. 9 soll nun noch eine Betrachtung bezüglich der axialen Dicke der Kolbenringe h erfolgen. Der Betrachtung liegen immer zwei in axialer Richtung benachbarte rillenartig vertiefte Bereiche zugrunde, die in gleicher Richtung verlaufen, also beispielsweise in Fig. 2 axial benachbarte rillenförmig vertiefte Bereiche 4a oder axial benachbarte rillenförmig vertiefte Bereiche 4b, oder beispielsweise in Fig. 6 axial benachbarte rillenförmig vertiefte Bereiche 4c, oder beispielsweise in Fig. 8 axial benachbarte ringförmig geschlossene Rillen 4f.

In Fig. 9 ist - wegen der einfacheren Darstellung - der Spezialfall einer Zylinderlaufbuchse dargestellt, in welcher ringförmig geschlossene Rillen 4f in der Wand 5 der Zylinderlaufbuchse vorgesehen sind (also vom Prinzip her wie in Fig. 8). Die Rillen 4f haben die Breite W und weisen einen Abstand D auf, sodass zwischen zwei benachbarten Rillen 4f ein Steg mit der Breite S gebildet wird. Ferner erkennt man in Fig. 9 einen Kolbenring, hier den Kolbenring 21, der eine axiale Dicke (oder Höhe) h aufweist. Schliesslich ist mit H ein Mass bezeichnet, welches sich von der Unterkante der in Fig. 9 unteren Rille bis zur Oberkante der in Fig. 9 oberen Rille 4f erstreckt. Dieses Mass H entspricht dem zweifachen der Breite W der Rille 4f zuzüglich der Breite S des zwischen den beiden Rillen liegenden Stegs, oder anders ausgedrückt dem Abstand D zuzüglich der Breite W einer Rille (zweimal die Hälfte der Breite W).

Bei dem in Fig. 9 dargestellten Ausführungsbeispiel mit ringförmig geschlossenen Rillen 4f beträgt die axiale Dicke h des Kolbenrings das zweifache der Breite W der Rille, sie liegt im allgemeinen - also insbesondere auch für die Fälle mit anderen rillenartig vertieften Bereichen - vorzugsweise im Bereich zwischen der Hälfte (dem 0.5-fachen) und dem zehnfachen (10-fachen) des Masses H. Bei dem in Fig. 9 dargestellten Beispiel, bei welchem die Breite S des Stegs gleich gross ist wie die Breite W der Rillen 4f, beträgt die Höhe h des Kolbenrings zwei Drittel des Masses H. Dadurch ist bereits eine ausreichend grosse Auflagefläche des Kolbenrings 21 auf der glatten, gehonten Fläche zwischen axial benachbarten Rillen gewährleistet.

## Patentansprüche

1. Zylinderlaufbuchse (1) für Brennkraftmaschinen, insbesondere für Grossdieselmotoren, mit einer Lauffläche für einen entlang dieser Lauffläche bewegbaren Kolben (2), wobei in der Lauffläche quer zur Laufrichtung des Kolbens (2) angeordnete, rillenförmig vertiefte Bereiche (4,4a,4b,4c,4d,4e,4f) vorgesehen sind, die eine vorgegebene Breite (W) aufweisen, und wobei - in Richtung der Längsachse (A) der Zylinderlaufbuchse (1) betrachtet - mindestens zwei rillenförmig vertiefte Bereiche benachbart zueinander und in gleicher Richtung verlaufend angeordnet sind, dadurch gekennzeichnet, dass der axiale Abstand (D) zweier benachbarter und in gleicher Richtung verlaufender, rillenförmig vertiefter Bereiche mindestens das eineinhalbfache ihrer Breite (W) beträgt.

2. Zylinderlaufbuchse nach Anspruch 1, dadurch gekennzeichnet, dass der axiale Abstand (D) zweier benachbarter und in gleicher Richtung verlaufender rillfenförmig vertiefter Bereiche (4,4a,4b,4c,4d,4e) das fünf- bis sechsfache ihrer Breite (W) beträgt.

3. Zylinderlaufbuchse nach einem der vorangehenden Ansprüche, dadurch gekennzeichnet, dass zumindest in dem Bereich der Lauffläche, der von dem unterhalb des obersten Kolbenrings (21) liegenden Teil des Kolbens (2) überstrichen wird, rillenförmig vertiefte Bereiche (4,4a,4b,4c,4d,4e,4f) vorgesehen sind.

4. Zylinderlaufbuchse nach Anspruch 4, dadurch gekennzeichnet, dass in dem gesamten Bereich der Lauffläche, der sich unterhalb des obersten Kolbenrings (21) erstreckt, wenn der Kolben (2) im oberen Totpunkt steht, rillenförmig vertiefte Bereiche (4,4a,4b,4c,4d,4e,4f) vorgesehen sind.

5. Zylinderlaufbuchse nach einem der vorangehenden Ansprüche, dadurch gekennzeichnet, dass die in der Lauffläche vorgesehenen rillenförmig vertieften Bereiche (4,4a,4b,4c,4d,4e) einer Schraubenlinie folgen oder Teilen davon.

6. Zylinderlaufbuchse nach einem der vorangehenden Ansprüche, dadurch gekennzeichnet, dass die in der Lauffläche vorgesehenen, rillenförmig vertieften Bereiche (4d,4e) so angeordnet sind, dass sie sich kreuzen.

7. Zylinderlaufbuchse nach einem der vorangehenden Ansprüche, dadurch gekennzeichnet, dass die in der Lauffläche vorgesehenen, rillenförmig vertieften Bereiche (4f) ringförmig geschlossen sind.

8. Zylinderlaufbuchse nach einem der vorangehenden Ansprüche, dadurch gekennzeichnet, dass das Profil der rillenförmig vertieften Bereiche (4,4a,4b,4c,4d,4e,4f) ein Ausschnitt aus einem Kreisbogen ist.

9. Zylinderlaufbuchse nach einem der vorangehenden Ansprüche, dadurch gekennzeichnet, dass der Quotient aus dem Mass (H) zwischen einander abgewandten Kanten zweier axial benachbarter und in gleicher Richtung verlaufender rillenartig vertiefter Bereiche (4,4a,4b,4c,4d,4e,4f) und der axialen Dicke (h) eines Kolbenrings (21,22,23,24) im Bereich zwischen 0.5 und 10 liegt.

10. Brennkraftmaschine, insbesondere Grossdieselmotor, mit mindestens einer Zylinderlaufbuchse (1) gemäss einem der vorangehenden Ansprüche.
